# EUROPEAN PATENT APPLICATION

(11) **EP 4 764 260 A1**
(43) Date of publication of application: **24.06.2026**
(21) Application number: 24222585.2
(22) Date of filing: 20.12.2024
(51) Int. Cl.: F16H 61/02, F16H 61/16

(54) **METHOD FOR CONTROLLING A GEARBOX OF A VEHICLE, RELATED COMPUTER SYSTEM AND VEHICLE**

(71) Applicant: VOLVO TRUCK CORPORATION, 405 08 Göteborg (SE)
(72) Inventor: MAGNUSSON, Andreas, 443 92 LERUM (SE); WINBLAD, Hanna, 433 62 SÄVEDALEN (SE); RYDQUIST, Kristoffer, 427 40 BILLDAL (SE); JAKOBSSON, Samuel, 418 73 GÖTEBORG (SE); SVÄRLING, Emma, 417 56 GÖTEBORG (SE)
(74) Representative: Lavoix

(57) **Abstract**

The invention concerns a method (100) for controlling a gearbox of a vehicle.

The method (100) comprises applying a high primary gear shifting strategy (102), comprising:
- calculating an achievable acceleration (108) that would be achieved if using the motor at full capability ;
- setting an acceleration limit (110), representing a lower threshold for shifting from a high primary gear to a low primary gear ;
- calculating a factored acceleration limit (112) by multiplying the acceleration limit by a factor depending on a current acceleration command ; and
- applying a primary gear selection (114), where the high primary gear is kept (116) if the achievable acceleration is greater than the factored acceleration limit and where the gearbox is shifted down to the low primary gear (118) if the achievable acceleration is equal to or smaller than the factored acceleration limit.

## Description

### TECHNICAL FIELD

The disclosure relates generally to the automatic shifting of gears in a vehicle. In particular aspects, the disclosure relates to a method for controlling a gearbox of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In vehicles with an automatic gearbox, in particular in electric vehicles, the shifting of the gearbox from one gear to another is usually triggered based on a speed and torque of the motor(s). However, the shifting interrupts the propulsion of the motor(s) connected to the gearbox. When all the motors need to be disconnected during the shift, shifting causes an interrupt in the propulsion, which can feel jerky and decreases drivability during shifting. There is therefore a need for a method that limits the frequency of such shifting while still offering an appropriate gear ratio.

### SUMMARY

According to a first aspect of the disclosure, the invention relates to a method for controlling a gearbox of a vehicle, the vehicle comprising a motor connected to the gearbox, the gearbox having primary gears comprising a high primary gear and a low primary gear, wherein the method comprises applying a high primary gear shifting strategy when a current primary gear of the gearbox is the high primary gear and the motor powers the vehicle via the gearbox so that a speed of the vehicle is non-zero, the high primary gear shifting strategy comprising:
- calculating an achievable acceleration that would be achieved if using the motor at full capability ;
- setting an acceleration limit, representing a lower threshold for shifting from the high primary gear to the low primary gear ;
- calculating a factored acceleration limit by multiplying the acceleration limit by a factor depending on a current acceleration command; and
- applying a primary gear selection, where the high primary gear is kept if the achievable acceleration is greater than the factored acceleration limit and where the gearbox is shifted down to the low primary gear if the achievable acceleration is equal or smaller than the factored acceleration limit.
The first aspect of the disclosure may seek to limit the frequency of shifting while still offering an appropriate gear ratio. A technical benefit may include a reduction of the occurrence of loss of propulsion that would be caused by overabundant shifting.

Optionally in some examples, including in at least one preferred example, the current acceleration command is proportional to a current position of an acceleration pedal of the vehicle, when the vehicle is in a manual acceleration mode. A technical benefit may include an adaptation of the gear selection to the acceleration requested by the driver via the acceleration pedal.

Optionally in some examples, including in at least one preferred example, the acceleration command is given by a cruise controller of the vehicle, when the vehicle is in an automatic acceleration mode. A technical benefit may include an adaptation of the gear selection to the acceleration required by the cruise controller.

Optionally in some examples, including in at least one preferred example, the factor is equal to a constant when the acceleration command belongs to a first range of values and proportional to the acceleration command when the acceleration command belongs to a second range of values. A technical benefit may include a better adaptation of the gear selection to the acceleration command.

Optionally in some examples, including in at least one preferred example, the constant is between 0.2 and 1.0 included and the factor is between the constant and 1.0 included. A technical benefit may include a reduction of the factored acceleration limit compared to the acceleration limit when the acceleration command is low, resulting in less frequent gear shifting to lower ratios.

Optionally in some examples, including in at least one preferred example, the constant is equal to 0.5. A technical benefit may include setting a minimum of for the factored acceleration limit, in order to guarantee that the selected gear can achieve the minimum factored acceleration limit no matter the acceleration command.

Optionally in some examples, including in at least one preferred example, the acceleration command is between 0% and 100% included and the first range of values is from 0% to 50%. A technical benefit may include avoiding having a too low factored acceleration limit when the acceleration command is close to zero.

Optionally in some examples, including in at least one preferred example, the acceleration command is between 0% and 100% included and the second range of values is from 50% to 100%. A technical benefit may include having a factored acceleration limit, and therefore a gear ratio, that is adapted to high acceleration commands.

Optionally in some examples, including in at least one preferred example, calculating the achievable acceleration takes into account at least one context parameter among a driving mode, a road inclination, an air drag, a roll resistance and a mass of the vehicle. A technical benefit may include having an achievable acceleration that is representative of real driving conditions.

Optionally in some examples, including in at least one preferred example, calculating the acceleration limit takes into account at least one context parameter among a driving mode, a road inclination, an air drag, a roll resistance, a mass of the vehicle and a current speed of the vehicle. A technical benefit may include setting a relevant acceleration limit.

Optionally in some examples, including in at least one preferred example, the method further comprises applying a low primary gear shifting strategy when the current primary gear of the gearbox is the low primary gear and the motor powers the vehicle via the gearbox so that the speed of the vehicle is non-zero, the low primary gear shifting strategy comprising:
- measuring a current rotation speed of the motor ;
- setting a rotation speed limit, representing an upper threshold for shifting to the high primary gear ; and
- applying a primary gear selection, where the low primary gear is kept if the current rotation speed is smaller than the rotation speed limit and where the gearbox is shifted up to the high primary gear if the current rotation speed is equal or higher than the rotation speed limit.
A technical benefit may include a better adaptation of the gear selection to the rotation speed of the motor.

Optionally in some examples, including in at least one preferred example, the method further comprises measuring the speed of the vehicle and applying the high primary gear strategy is executed only if the speed of the vehicle is below a predetermined speed limit. A technical benefit may include optimizing the gear ratios at high speed, where energy efficiency is privileged, as opposed to low speed, where the performance in terms of drivability and less frequent shifting is more important.

Optionally in some examples, including in at least one preferred example, the predetermined speed limit is 30 km/h. A technical benefit may include optimizing the gear ratios above 30 km/h, where energy efficiency is privileged, as opposed to below 30 km/h, where the performance in terms of drivability and less frequent shifting is more important.

According to a second aspect of the disclosure, the invention relates to a computer system comprising processing circuitry configured to implement the method. The second aspect of the disclosure may seek to provide to a vehicle the ability to implement the method. A technical benefit may include the same benefits as the above-cited benefits of the method.

According to a third aspect of the disclosure, the invention relates to a vehicle comprising such computer system, a motor and a gearbox, connected to the motor, the gearbox having primary gears comprising a high primary gear and a low primary gear. A technical benefit may include the same benefits as the above-cited benefits of the method.

Optionally in some examples, including in at least one preferred example, the gearbox further comprises secondary gears connecting the motor to the primary gears so that the motor powers the vehicle successively via the secondary gears and the primary gears. A technical benefit may include combining respective benefits of each of the primary gears and the secondary gears regarding torque and speed.

Optionally in some examples, including in at least one preferred example, the primary gears are range gears. A technical benefit may include adapting a range gear ratio between the motors and the wheels between a low range gear ratio, used at low speed of the vehicle when high torque is needed, and a high range gear ratio, used at high speed of the vehicle when a maximum energy efficiency is needed.

Optionally in some examples, including in at least one preferred example, the motor is a first motor, the secondary gears are first secondary gears, and the vehicle further comprises a second motor and second secondary gears, connecting the second motor to the primary gears so that the second motor powers the vehicle via the second secondary gears and the primary gears. A technical benefit may include a continuation of the propulsion by the second motor when the first secondary gears are shifting. In a similar way, the first motor provides a continuation of the propulsion when the second secondary gears are shifting.

According to a fourth aspect of the disclosure, the invention relates to a computer program product comprising program code for performing the method when executed by a processing circuitry. A technical benefit may include the same benefits as the above-cited benefits of the method.

According to a fifth aspect of the disclosure, the invention relates to a non-transitory computer-readable storage medium comprising instructions, which when executed by a processing circuitry, cause the processing circuitry to perform the method. A technical benefit may include the same benefits as the above-cited benefits of the method.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary diagram of a vehicle according to the invention.
**FIG. 2** is an exemplary flowchart of a method according to the invention.
**FIG. 3** is a curve of a factor used in the method of figure 2 across acceleration command.

### DETAILED DESCRIPTION

The detailed description set forth below provides information and examples of the disclosed technology with sufficient detail to enable those skilled in the art to practice the disclosure.

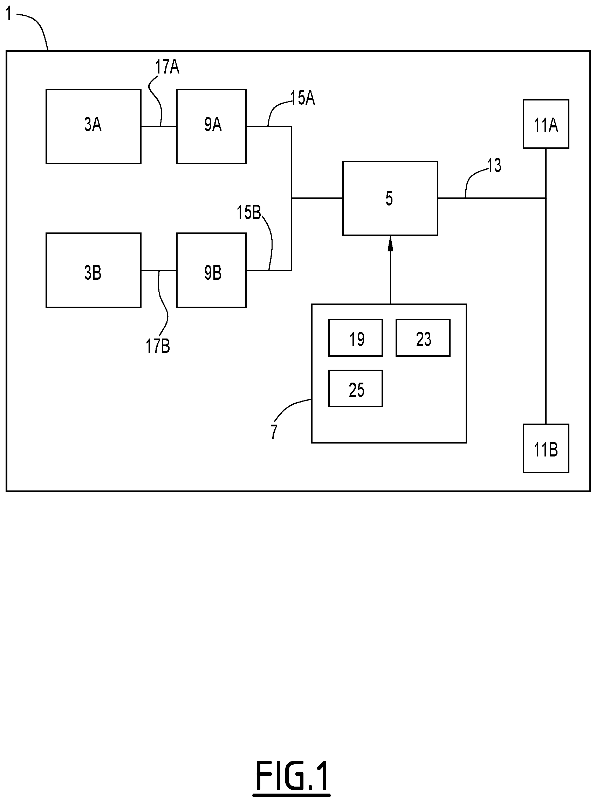

FIG. **1** is an exemplary system diagram of a vehicle according to an example. The vehicle is for example a heavy-duty vehicle, such as a truck. The vehicle comprises at least one motor 3A and/or 3B, a gearbox and a computer system 7. On the example illustrated on FIG. 1, the vehicle comprises two motors 3A and 3B.

The motors 3A and 3B are advantageously electric motors. The motors 3A and 3B are configured to provide propulsion to at least two wheels 11A and 11B of the vehicle 1, for example to four wheels of the vehicle 1, through a common output shaft 13.

The gearbox is connected between each motor 3A and 3B and the output shaft 13. The gearbox advantageously comprises primary gears 5 and secondary gears 9A and 9B.

The primary gears 5 are configured to apply a gear ratio between an individual output shaft 15A and 15B of each motor 3A and 3B and the common output shaft 13. The primary gears 5 have at least a low primary gear and a high primary gear. The low primary gear provides a high gear ratio and is therefore selected to drive the wheels 11A and 11B with a low wheel speed and high wheel torque. The high primary gear provides a low gear ratio and is therefore selected to drive the wheels 11A and 11B with a high wheel speed and low wheel torque. The primary gears are advantageously range gears.

Due to the above-described structure, a shifting from one gear of the primary gears 5 to the other causes an interrupt in the propulsion of the wheels 11A and 11B by the motors 3A and 3B.

The secondary gears 9A and 9B are advantageously connected between a direct shaft 17A or 17B of the motor 3A or 3B respectively and the individual output shaft 15A and 15B respectively. In other words, the first secondary gears 9A are connected between the first direct shaft 17A and the first individual output shaft 15A, while the second secondary gears 9B are connected between the second direct shaft 17B and the second individual shaft 15B.

The secondary gears 9A and 9B are configured to apply a gear ratio between the direct shaft 17A or 17B respectively and the individual output shaft 15A or 15B respectively. The first secondary gears 9A and the second secondary gears 9B are advantageously independent from each other, so that shifting the gear ratio does not cause an interrupt in the propulsion of the wheels 11A and 11B by the other motor 3B or 3A respectively.

In a non-represented variant, the secondary gears 9A and 9B share common parts and a common intermediary output shaft instead of two individual output shafts 15A and 15B.

The final reduction ratio between one of the motors 3A or 3B and the output shaft 13 is therefore the product of the gear ratio of the primary gears 5 with the gear ratio of the respective secondary gears 9A or 9B.

The computer system 7 is configured to control a shifting of the primary gears 5 from one gear to the other according to a method 100 described below. Alternatively, the computer system 7 is configured to control a shifting of the secondary gears 9A and/or 9B according to the method 100.

The computer system 7 is adapted to execute instructions from a computer-readable medium to perform these and/or any of the functions or processing described herein. The computer system 7 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 7 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 7 may comprise at least one computing device or electronic device capable of including firmware, hardware, and/or executing software instructions to implement the functionality described herein. The computer system 7 may include processing circuitry 19 (e.g., processing circuitry including one or more processor devices or control units), a memory 23, and a system bus 25. The computer system 7 may include at least one computing device having the processing circuitry 19. The system bus 25 provides an interface for system components including, but not limited to, the memory 23 and the processing circuitry 19. The processing circuitry 19 may include any number of hardware components for conducting data or signal processing or for executing computer code stored in memory 23. The processing circuitry 19 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 19 may further include computer executable code that controls operation of the programmable device.

The system bus 25 may be any of several types of bus structures that may further interconnect to a memory bus (with or without a memory controller), a peripheral bus, and/or a local bus using any of a variety of bus architectures. The memory 23 may be one or more devices for storing data and/or computer code for completing or facilitating methods described herein. The memory 23 may include database components, object code components, script components, or other types of information structure for supporting the various activities herein. Any distributed or local memory device may be utilized with the systems and methods of this description. The memory 23 may be communicably connected to the processing circuitry 19 (e.g., via a circuit or any other wired, wireless, or network connection) and may include computer code for executing one or more processes described herein. The memory 23 may include non-volatile memory (e.g., read-only memory (ROM), erasable programmable read-only memory (EPROM), electrically erasable programmable read-only memory (EEPROM), etc.), and volatile memory (e.g., random-access memory (RAM)), or any other medium which can be used to carry or store desired program code in the form of machine-executable instructions or data structures and which can be accessed by a computer or other machine with processing circuitry 19. A basic input/output system (BIOS) may be stored in the non-volatile memory and can include the basic routines that help to transfer information between elements within the computer system 7.

The computer system 7 may further include or be coupled to a non-transitory computer-readable storage medium such as a storage device, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device and/or in the volatile memory, which may include an operating system and/or one or more program modules. All or a portion of the examples disclosed herein may be implemented as a computer program stored on a transitory or non-transitory computer-usable or computer-readable storage medium (e.g., single medium or multiple media), such as the storage device, which includes complex programming instructions (e.g., complex computer-readable program code) to cause the processing circuitry 19 to carry out actions described herein. Thus, the computer-readable program code of the computer program can comprise software instructions for implementing the functionality of the examples described herein when executed by the processing circuitry 19. In some examples, the storage device may be a computer program product (e.g., readable storage medium) storing the computer program thereon, where at least a portion of a computer program may be loadable (e.g., into a processor) for implementing the functionality of the examples described herein when executed by the processing circuitry 19. The processing circuitry 19 may serve as a controller or control system for the computer system that is to implement the functionality described herein.

The computer system 7 may include an input device interface configured to receive input and selections to be communicated to the computer system 7 when executing instructions, such as from a keyboard, mouse, touch-sensitive surface, etc. Such input devices may be connected to the processing circuitry 19 through the input device interface coupled to the system bus 25 but can be connected through other interfaces, such as a parallel port, an Institute of Electrical and Electronic Engineers (IEEE) 1394 serial port, a Universal Serial Bus (USB) port, an IR interface, and the like. The computer system 7 may include an output device interface configured to forward output, such as to a display, a video display unit (e.g., a liquid crystal display (LCD) or a cathode ray tube (CRT)). The computer system 7 may include a communications interface suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

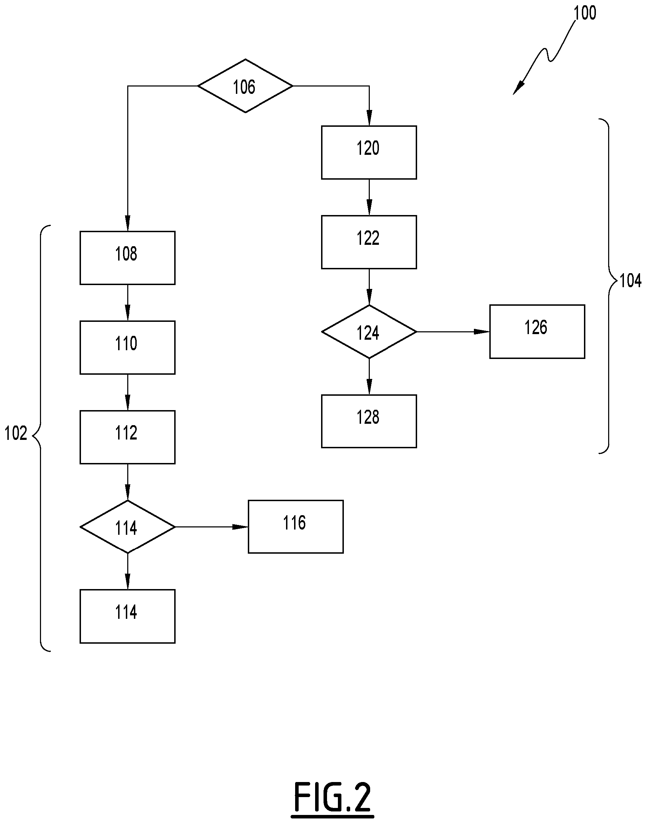

The method 100 for controlling the gearbox of the vehicle 1, executed by the computer system 7, is represented on FIG. 2 and described below.

The method 100 comprises applying a high primary gear shifting strategy 102. Advantageously, the method 100 further comprises applying a low primary gear strategy 104.

To determine whether to apply the high primary gear strategy or the low primary gear strategy, the method 100 advantageously comprises a strategy selection step 106. The strategy selection step 106 comprises measuring a speed of the vehicle 1. When a current primary gear of the gearbox is the high primary gear and the speed of the vehicle 1 is non-zero, the high primary gear strategy is applied. When a current primary gear of the gearbox is the low primary gear and the speed of the vehicle 1 is non-zero, the low primary gear strategy is applied.

In a variant, the high primary gear strategy is executed only if the speed of the vehicle is below a predetermined speed limit. The predetermined speed limit is for example 30 km/h. Above the predetermined speed limit, a usual shifting strategy is applied. This additional condition optimizes the gear ratio above the predetermined speed limit, where energy efficiency is privileged, as opposed to low speed, where the performance in terms of drivability and less frequent shifting is more important.

The high primary gear strategy comprises calculating an achievable acceleration 108, setting an acceleration limit 110, calculating a factored acceleration 112 and applying a primary gear selection 114.

The achievable acceleration is an acceleration of the vehicle 1 that would be achieved if using the motors 3A and 3B at full capability with the current primary gear 5. Calculating the achievable acceleration advantageously takes into account at least one context parameter among a driving mode, a road inclination, an air drag, a roll resistance and a mass of the vehicle 1, preferably all context parameters.

The acceleration limit is a value representing a lower threshold for shifting from the high primary gear to the low primary gear. Calculating the acceleration limit advantageously takes into account at least one context parameter among a driving mode, a road inclination, an air drag, a roll resistance, a mass of the vehicle 1 and a speed of the vehicle 1, preferably all context parameters.

Calculating the factored acceleration limit comprises multiplying the acceleration limit by a factor F depending on a current acceleration command AC. The goal of this step is to make the factored acceleration limit representative of a real need in terms of acceleration, so that the primary gear is switched only when needed.

The acceleration command AC either comes from an acceleration pedal of the vehicle 1, when the vehicle 1 is in a manual acceleration mode, or from a cruise controller of the vehicle 1, when the vehicle 1 is in an automatic acceleration mode.

When the acceleration command AC comes from the acceleration pedal, the acceleration command AC is advantageously proportional to a current position of the pedal. The acceleration command AC is equal to 0% when a driver of the vehicle 1 does not touch the pedal, and equal to 100% when the driver pushes the pedal at a maximum.

When the acceleration command AC comes from the cruise controller, the cruise controller provides for example an acceleration command AC between 0% and 100%.

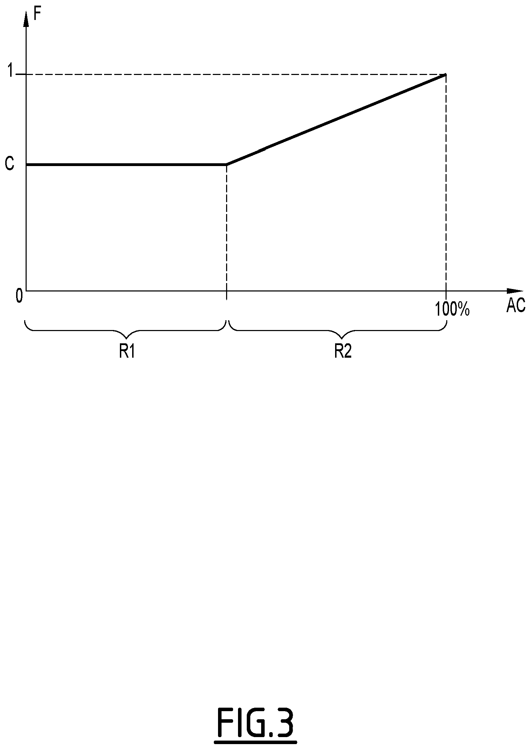

An exemplary curve of the factor F versus the acceleration AC is represented on FIG.3. The factor F is equal to a constant C when the acceleration command AC belongs to a first range of values R1, and proportional to the acceleration command AC when the acceleration command AC belongs to a second range of values R2. The factor C is advantageously between 0.0 and 1.0, so that the factored acceleration limit is between 0 and the acceleration limit that was set at step 110. The constant C is advantageously between 0.2 and 1.0, preferably equal to 0.5. The first range of values R1 advantageously ranges from 0% to 50%. The second range of value R2 advantageously ranges from 0% to 50%. Therefore, the factored acceleration limit is kept to a minimum of 0.5 multiplied by the acceleration limit, so that the acceleration capability of the motors 3A and 3B at the selected gear is always above this minimum, no matter the acceleration command AC. When the acceleration command AC belongs to the second range of values R2, the proportionality guarantees that the factored acceleration limit is representative of the current needs in terms of acceleration.

Applying a primary gear selection 114 is dependent on the achievable acceleration and the factored acceleration command. The idea is to switch to the low primary gear only if a requested acceleration, represented by the factored acceleration limit, cannot be achieved by the motors 3A and 3B at full capability with the current primary gear. In other words, the high primary gear is kept if the achievable acceleration is greater than the factored acceleration limit. Keeping the high primary gear is referenced 116 on FIG.2. On the contrary, the gearbox is shifted down to the low primary gear if the achievable acceleration is equal or smaller than the factored acceleration limit. Shifting to the low primary gear is referenced 118 on FIG.2. Therefore, the high primary range shifting strategy guarantees that the selected primary gear is adapted to the current acceleration command, while reducing the number of shifts to a minimum, thus avoiding unnecessary interrupts in the propulsion of the wheels 11A and 11B by the motors 3A and 3B.

The low primary gear strategy comprises measuring a current rotation speed of the motor 120, setting a rotation speed limit 122 and applying a primary gear selection 124.

The rotation speed limit represents an upper threshold for shifting to the high primary gear. In other words, the rotation speed limit is a maximum speed limit that should not be exceeded.

Applying a primary gear selection 124 is dependent on the current rotation speed and the rotation speed limit. The low primary gear is kept if the current rotation speed is smaller than the rotation speed limit. Keeping the low primary gear is referenced 126 on FIG.2. On the contrary, the gearbox is shifted up to the high primary gear if the current rotation speed is equal or higher than the rotation speed limit. Shifting to the high primary gear is referenced 128 on FIG.2. Since shifting to a higher primary gear makes a same rotation speed of the wheels 11A and 11B correspond to a lower rotation speed of the motors 3A and 3B, shifting to the high primary gear 128 allows to keep the rotation speed of the motors 3A and 3B below the rotation speed limit.

**Example 1:** a method 100 for controlling a gearbox of a vehicle 1, the vehicle 1 comprising a motor 3A, 3B connected to the gearbox, the gearbox having primary gears 5 comprising a high primary gear and a low primary gear, wherein the method 100 comprises applying a high primary gear shifting strategy 102 when a current primary gear 5 of the gearbox is the high primary gear and the motor 3A, 3B powers the vehicle 1 via the gearbox so that a speed of the vehicle 1 is non-zero, the high primary gear shifting strategy 102 comprising:
- calculating an achievable acceleration 108 that would be achieved if using the motor 3A, 3B at full capability ;
- setting an acceleration limit 110, representing a lower threshold for shifting from the high primary gear to the low primary gear ;
- calculating a factored acceleration limit 112 by multiplying the acceleration limit by a factor F depending on a current acceleration command AC ; and
- applying a primary gear selection 114, where the high primary gear is kept 116 if the achievable acceleration is greater than the factored acceleration limit and where the gearbox is shifted down to the low primary gear 118 if the achievable acceleration is equal to or smaller than the factored acceleration limit.

**Example 2:** The method 100 of example 1, wherein the current acceleration command AC is proportional to a current position of an acceleration pedal of the vehicle 1, when the vehicle 1 is in a manual acceleration mode.

**Example 3:** The method 100 of any of examples 1 and 2, wherein the acceleration command AC is given by a cruise controller of the vehicle 1, when the vehicle 1 is in an automatic acceleration mode.

**Example 4:** The method 100 of any of examples 1 to 3, wherein the factor F is:
- equal to a constant C when the acceleration command AC belongs to a first range of values R1 ; and
- proportional to the acceleration command AC when the acceleration command AC belongs to a second range of values R2.

**Example 5:** The method 100 of example 4, wherein the constant C is between 0.2 and 1.0 included and the factor F is between the constant C and 1.0 included.

**Example 6:** The method 100 of any of examples 4 and 5, wherein the constant C is equal to 0.5.

**Example 7:** The method 100 of any of examples 4 to 6, wherein the acceleration command AC is between 0% and 100% included and the first range of values R1 is from 0% to 50%.

**Example 8:** The method 100 of any of examples 4 to 7, wherein the acceleration command AC is between 0% and 100% included and the second range of values R2 is from 50% to 100%.

**Example 9:** The method 100 of any of examples 1 to 8, wherein calculating the achievable acceleration 108 takes into account at least one context parameter among a driving mode, a road inclination, an air drag, a roll resistance and a mass of the vehicle 1.

**Example 10:** The method 100 of any of examples 1 to 9, wherein setting the acceleration limit 110 takes into account at least one context parameter among a driving mode, a road inclination, an air drag, a roll resistance, a mass of the vehicle 1 and a current speed of the vehicle 1.

**Example 11:** The method 100 of any of examples 1 to 10, further comprising applying a low primary gear shifting strategy 104 when the current primary gear 5 of the gearbox is the low primary gear and the motor 3A, 3B powers the vehicle 1 via the gearbox so that the speed of the vehicle 1 is non-zero, the low primary gear shifting strategy 104 comprising:
- measuring a current rotation speed of the motor 102 ;
- setting a rotation speed limit 122, representing an upper threshold for shifting to the high primary gear ; and
- applying a primary gear selection 124, where the low primary gear is kept 126 if the current rotation speed is smaller than the rotation speed limit and where the gearbox is shifted up to the high primary gear 128 if the current rotation speed is equal to or higher than the rotation speed limit.

**Example 12:** The method 100 of any of examples 1 to 11, further comprising measuring the speed of the vehicle 1 and wherein applying the high primary gear strategy 102 is executed only if the speed of the vehicle 1 is below a predetermined speed limit.

**Example 13:** The method 100 of example 12, wherein the predetermined speed limit is 30 km/h.

**Example 14:** A computer system 7 comprising processing circuitry 19 configured to implement the method 100 of any of examples 1 to 13.

**Example 15:** A vehicle 1 comprising:
- the computer system 7 of example 14,
- a motor 3A, 3B, and
- a gearbox, connected to the motor 3A, 3B, the gearbox having primary gears 5 comprising a high primary gear and a low primary gear.

**Example 16:** The vehicle 1 of example 15, wherein the gearbox further comprises secondary gears 9A, 9B connecting the motor 3A, 3B to the primary gears 5 so that the motor 3A, 3B powers the vehicle 1 successively via the secondary gears 9A, 9B and the primary gears 5.

**Example 17:** The vehicle of any of examples 15 and 16, wherein the primary gears are range gears.

**Example 18:** The vehicle of any of examples 15 to 17, wherein the motor is a first motor, the secondary gears are first secondary gears, and the vehicle further comprises a second motor and second secondary gears, connecting the second motor to the primary gears so that the second motor powers the vehicle via the second secondary gears and the primary gears.

**Example 19:** A computer program product comprising program code for performing the method when executed by a processing circuitry.

**Example 20:** A non-transitory computer-readable storage medium comprising instructions, which when executed by a processing circuitry, cause the processing circuitry to perform the method of any of examples 1 to 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method (100) for controlling a gearbox of a vehicle (1), the vehicle (1) comprising a motor (3A, 3B) connected to the gearbox, the gearbox having primary gears (5) comprising a high primary gear and a low primary gear, wherein the method (100) comprises applying a high primary gear shifting strategy (102) when a current primary gear (5) of the gearbox is the high primary gear and the motor (3A, 3B) powers the vehicle (1) via the gearbox so that a speed of the vehicle (1) is non-zero, the high primary gear shifting strategy (102) comprising:
- calculating an achievable acceleration (108) that would be achieved if using the motor (3A, 3B) at full capability ;
- setting an acceleration limit (110), representing a lower threshold for shifting from the high primary gear to the low primary gear ;
- calculating a factored acceleration limit (112) by multiplying the acceleration limit by a factor (F) depending on a current acceleration command (AC) ; and
- applying a primary gear selection (114), where the high primary gear is kept (116) if the achievable acceleration is greater than the factored acceleration limit and where the gearbox is shifted down to the low primary gear (118) if the achievable acceleration is equal to or smaller than the factored acceleration limit.

2. The method (100) of claim 1, wherein the current acceleration command (AC) is proportional to a current position of an acceleration pedal of the vehicle (1), when the vehicle (1) is in a manual acceleration mode.

3. The method (100) of any of claims 1 and 2, wherein the acceleration command (AC) is given by a cruise controller of the vehicle (1), when the vehicle (1) is in an automatic acceleration mode.

4. The method (100) of any of claims 1 to 3, wherein the factor (F) is:
- equal to a constant (C) when the acceleration command (AC) belongs to a first range of values (R1) ; and
- proportional to the acceleration command (AC) when the acceleration command (AC) belongs to a second range of values (R2).

5. The method (100) of claim 4, wherein the constant (C) is between 0.2 and 1.0 included and the factor (F) is between the constant (C) and 1.0 included.

6. The method (100) of any of claims 4 and 5, wherein the constant (C) is equal to 0.5.

7. The method (100) of any of claims 4 to 6, wherein the acceleration command (AC) is between 0% and 100% included and the first range of values (R1) is from 0% to 50%.

8. The method (100) of any of claims 4 to 7, wherein the acceleration command (AC) is between 0% and 100% included and the second range of values (R2) is from 50% to 100%.

9. The method (100) of any of claims 1 to 8, wherein calculating the achievable acceleration (108) takes into account at least one context parameter among a driving mode, a road inclination, an air drag, a roll resistance and a mass of the vehicle (1).

10. The method (100) of any of claims 1 to 9, wherein setting the acceleration limit (110) takes into account at least one context parameter among a driving mode, a road inclination, an air drag, a roll resistance, a mass of the vehicle (1) and a current speed of the vehicle (1).

11. The method (100) of any of claims 1 to 10, further comprising applying a low primary gear shifting strategy (104) when the current primary gear (5) of the gearbox is the low primary gear and the motor (3A, 3B) powers the vehicle (1) via the gearbox so that the speed of the vehicle (1) is non-zero, the low primary gear shifting strategy (104) comprising:
- measuring a current rotation speed of the motor (102) ;
- setting a rotation speed limit (122), representing an upper threshold for shifting to the high primary gear ; and
- applying a primary gear selection (124), where the low primary gear is kept (126) if the current rotation speed is smaller than the rotation speed limit and where the gearbox is shifted up to the high primary gear (128) if the current rotation speed is equal to or higher than the rotation speed limit.

12. The method (100) of any of claims 1 to 11, further comprising measuring the speed of the vehicle (1) and wherein applying the high primary gear strategy (102) is executed only if the speed of the vehicle (1) is below a predetermined speed limit, preferably 30 km/h.

13. A computer system (7) comprising processing circuitry (19) configured to implement the method (100) of any of claims 1 to 13.

14. A vehicle (1) comprising:
- the computer system (7) of claim 14,
- a motor (3A, 3B), and
- a gearbox, connected to the motor (3A, 3B), the gearbox having primary gears (5) comprising a high primary gear and a low primary gear.

15. The vehicle (1) of claim 15, wherein the gearbox further comprises secondary gears (9A, 9B) connecting the motor (3A, 3B) to the primary gears (5) so that the motor (3A, 3B) powers the vehicle (1) successively via the secondary gears (9A, 9B) and the primary gears (5).

## Amended claims

### Amended claims in accordance with Rule 137(2) EPC.

1. A method (100) for controlling a gearbox of a vehicle (1), the vehicle (1) comprising a motor (3A, 3B) connected to the gearbox, the gearbox having primary gears (5) comprising a high primary gear and a low primary gear, wherein the method (100) comprises applying a high primary gear shifting strategy (102) when a current primary gear (5) of the gearbox is the high primary gear and the motor (3A, 3B) powers the vehicle (1) via the gearbox so that a speed of the vehicle (1) is non-zero, the high primary gear shifting strategy (102) comprising:
- calculating an achievable acceleration (108) that would be achieved if using the motor (3A, 3B) at full capability ;
**characterized in that** the high primary gear shifting strategy (102) further comprises:
- setting an acceleration limit (110), representing a lower threshold for shifting from the high primary gear to the low primary gear ;
- calculating a factored acceleration limit (112) by multiplying the acceleration limit by a factor (F) depending on a current acceleration command (AC) ; and
- applying a primary gear selection (114), where the high primary gear is kept (116) if the achievable acceleration is greater than the factored acceleration limit and where the gearbox is shifted down to the low primary gear (118) if the achievable acceleration is equal to or smaller than the factored acceleration limit.

2. The method (100) of claim 1, wherein the current acceleration command (AC) is proportional to a current position of an acceleration pedal of the vehicle (1), when the vehicle (1) is in a manual acceleration mode.

3. The method (100) of any of claims 1 and 2, wherein the acceleration command (AC) is given by a cruise controller of the vehicle (1), when the vehicle (1) is in an automatic acceleration mode.

4. The method (100) of any of claims 1 to 3, wherein the factor (F) is:
- equal to a constant (C) when the acceleration command (AC) belongs to a first range of values (R1) ; and
- proportional to the acceleration command (AC) when the acceleration command (AC) belongs to a second range of values (R2).

5. The method (100) of claim 4, wherein the constant (C) is between 0.2 and 1.0 included and the factor (F) is between the constant (C) and 1.0 included.

6. The method (100) of any of claims 4 and 5, wherein the constant (C) is equal to 0.5.

7. The method (100) of any of claims 4 to 6, wherein the acceleration command (AC) is between 0% and 100% included and the first range of values (R1) is from 0% to 50%.

8. The method (100) of any of claims 4 to 7, wherein the acceleration command (AC) is between 0% and 100% included and the second range of values (R2) is from 50% to 100%.

9. The method (100) of any of claims 1 to 8, wherein calculating the achievable acceleration (108) takes into account at least one context parameter among a driving mode, a road inclination, an air drag, a roll resistance and a mass of the vehicle (1).

10. The method (100) of any of claims 1 to 9, wherein setting the acceleration limit (110) takes into account at least one context parameter among a driving mode, a road inclination, an air drag, a roll resistance, a mass of the vehicle (1) and a current speed of the vehicle (1).

11. The method (100) of any of claims 1 to 10, further comprising applying a low primary gear shifting strategy (104) when the current primary gear (5) of the gearbox is the low primary gear and the motor (3A, 3B) powers the vehicle (1) via the gearbox so that the speed of the vehicle (1) is non-zero, the low primary gear shifting strategy (104) comprising:
- measuring a current rotation speed of the motor (102) ;
- setting a rotation speed limit (122), representing an upper threshold for shifting to the high primary gear ; and
- applying a primary gear selection (124), where the low primary gear is kept (126) if the current rotation speed is smaller than the rotation speed limit and where the gearbox is shifted up to the high primary gear (128) if the current rotation speed is equal to or higher than the rotation speed limit.

12. The method (100) of any of claims 1 to 11, further comprising measuring the speed of the vehicle (1) and wherein applying the high primary gear strategy (102) is executed only if the speed of the vehicle (1) is below a predetermined speed limit, preferably 30 km/h.

13. A computer system (7) comprising processing circuitry (19) configured to implement the method (100) of any of claims 1 to 12.

14. A vehicle (1) comprising:
- the computer system (7) of claim 13,
- a motor (3A, 3B), and
- a gearbox, connected to the motor (3A, 3B), the gearbox having primary gears (5) comprising a high primary gear and a low primary gear.

15. The vehicle (1) of claim 14, wherein the gearbox further comprises secondary gears (9A, 9B) connecting the motor (3A, 3B) to the primary gears (5) so that the motor (3A, 3B) powers the vehicle (1) successively via the secondary gears (9A, 9B) and the primary gears (5).
